# EUROPÄISCHE PATENTSCHRIFT

(11) **EP 0 809 852 B1**
(45) Veröffentlichungstag und Bekanntmachung des Hinweises auf die Patenterteilung: **19.01.2000**
(21) Anmeldenummer: 96904049.2
(22) Anmeldetag: 09.02.1996
(51) Int. Cl.: H01F 6/06, H02G 15/34

(54) **GASDURCHLÄSSIGE HOCHSPANNUNGSISOLATION**
GAS-PERMEABLE HIGH-VOLTAGE INSULATION
ISOLATION HAUTE TENSION PERMEABLE AUX GAZ

(30) Priorität: 14.02.1995 DE 19504857
(43) Veröffentlichungstag der Anmeldung: 03.12.1997
(73) Patentinhaber: Max-Planck-Gesellschaft zur Förderung der Wissenschaften e.V., 80539 München (DE)
(72) Erfinder: SCHAUER, Felix, D-80801 München (DE)
(74) Vertreter: Hertz, Oliver, Dr.
(86) Internationale Anmeldenummer: EP9600559
(87) Internationale Veröffentlichungsnummer: WO9625751

(56) Entgegenhaltungen:
- EP-A- 0 464 498
- EP-A- 0 596 249
- PATENT ABSTRACTS OF JAPAN Bd. 10, Nr. 46 (E-383) <2103> 22 Februar 1986 & JP,A,60 200 579 (MITSUBISHI DENKI) 11 Oktober 1985

## Beschreibung

Die Erfindung betrifft eine Hochspannungsisolation gemäß dem Oberbegriff des Anspruchs 1.

Große supraleitende Magnetspulen werden meist aus Supraleiterkabeln gewickelt, die von einer dichten, rohrförmigen Metallhülle umgeben sind. Das Kühlmittel Helium hält das Kabel auf Temperaturen in der Nähe des absoluten Nullpunktes; es strömt im Inneren der Hülle zwischen den Kabellitzen ("intern gekühltes Supraleiterkabel"). Vor dem Wickeln einer Spule wird der Spulenleiter normalerweise mit Kunststoff, Glasfaser- oder einem anderen geeigneten Gewebe umgeben und nach dem Wickeln mit Epoxidharz vergossen. Dadurch ergibt sich eine hochspannungsfeste Spule, die je nach Bauweise Spannungen bis zu mehreren zehn kV standhalten kann. Die Leiterenden werden entweder gleichzeitig mit dem gesamten Spulenleiter isoliert und mit dem Wickelkörper vergossen oder nachträglich beispielsweise durch "Naßwickeln" mit einem epoxidharzgetränkten Isolatorgewebe isoliert. Schwieriger ist jedoch die Isolation der Leiterverbindungen sowie der Strom- und Heliumanschlüsse.

Im Betrieb sind sowohl die beschriebenen Spulen incl. eventueller Stahlgehäuse als auch die aus den Wickelkörpern und Gehäusen herausragenden Spulenanschlüsse zwecks thermischer Isolation von Hochvakuum umgeben. Hochvakuum ist bekanntlich auch ein hervorragender elektrischer Isolator, so daß die Hochspannungsfestigkeit sowohl der Spulen als auch der Anschlüsse im Normalbetrieb kein Problem darstellt. Sollte jedoch in einem Störfall Gas, beispielsweise Helium, durch ein Leck in den Hochvakuumraum eintreten, könnte sich bei Erreichen eines entsprechenden Druckes das Paschen-Minimum zwischen einem spannungsführenden Spulen- oder Anschlußteil und einer geerdeten Elektrode (Rohrleitung, Strukturteil etc.) einstellen. Die Durchschlagsspannung von Helium im Paschen-Minimum liegt bei nur ca. 160 V. Die Isolation des gesamten Spulensystems incl. aller Anschlüsse und Zuleitungen ist daher für das Paschen-Minimum auszulegen, d.h. die Isolation muß "Paschen-dicht" sein. Das bedeutet, daß im ungünstigsten Fall alle Isolatorüberzüge der Kabelenden und Anschlüsse der vollen - wegen der Gasionisation direkt anliegenden - Spannung standhalten müssen.

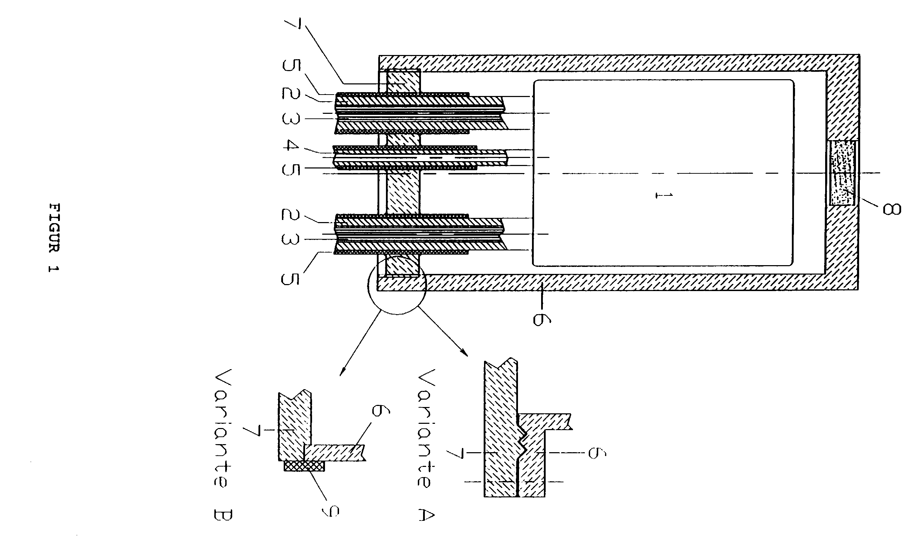

Die Kabelverbindungen zwischen zwei Spulen oder Spulenteilen sind meist Lötstellen, die sich beispielsweise in einem metallischen Gehäuse 1 (auch Verbindungstopf genannt) befinden (s. Fig. 1). Die beiden Leiterenden der zu verbindenden Wicklungen, d.h. die Kabelhüllen 2, die die eigentlichen Supraleiterkabel 3 enthalten, sind mit dem Verbindungsgehäuse dicht verschweißt. Oft wird über die Gehäuse auch das Kühlhelium den Kabeln zu- bzw. abgeführt. Beispielsweise strömt in Fig. 1 Helium durch das ebenfalls dicht mit dem Gehäuse verschweißte Rohr 4 in das Gehäuse und von dort je zur Hälfte in das Innere der beiden Supraleitkabel 3. Das Kühlmittel kann dem Leiter beispielsweise auch über ein direkt mit der Leiterhülle verschweißtes Rohr zugeführt werden.

Sowohl die Leiterenden als auch das He-Rohr sind von der elektrischen Isolation 5 überzogen. Falls noch irgendwelche Instrumentierungen wie beispielsweie Druckfühler oder Spannungsabgriffe vorgesehen sind, müssen die entsprechenden Zuleitungen im Inneren der Heliumzuführung oder durch eigene, dem He-Rohr entsprechende Rohre geführt werden.

In einem Magnetsystem, das aus mehreren Spulen besteht, können die Spulenanschlüsse erst nach der Installation der Spulen hergestellt werden. Die Montageschweißnähte der entsprechenden Verbindungsgehäuse können somit erst nach dem Abkühlen des gesamten Systems kalt, d.h. endgültig, leckgetestet werden. Die Isolation dieser Gehäuse und der unmittelbar anschließenden blanken Leiter- und Rohrenden kann naturgemäß erst nach der Fertigstellung der Verbindungen und Anschlüsse erfolgen. Erschwerend kommt hinzu, daß im Spulen-Anschlußbereich oft mehrere Leiterverbindungen von Spulenteilen nebeneinander angeordnet sind, so daß sehr beengte Raumverhältnisse vorliegen.

Ob die Spulenanschluß-Isolation nun vor oder nach dem ersten Abkühlen bzw. endgültigen Lecktest aufgebracht wird, hängt davon ab, welche Isolation man verwendet und welches Risiko man einzugehen bereit ist. Beispielsweise könnte man die Isolation erst nach dem Abkühlen und den kalten Lecktests montieren. Das wäre aber aufwendig, da dazu der Kryostat wieder geöffnet und ausreichend Zugang zu den Spulen-Anschlußstellen hergestellt (u.a. auch die thermische Isolation entfernt) werden müßte. Wenn die Isolation vor dem ersten Kaltfahren aufgebracht wird, sollte sie für den Fall eines auftretenden Kaltlecks des Verbindungsgehäuses entweder selbst heliumdicht sein oder, wenn die Isolation gasdurchlässig ist, für eine eventuelle Reparatur des Gehäuses einfach abnehmbar sein. Eine ausreichende Heliumdichtheit, die über viele Temperaturzyklen zu gewährleisten ist, ist schwierig zu erreichen. Außerdem muß die Isolation im Falle eines Lecks dem vollen He-Druck standhalten. Andererseits wäre einfache Demontierbarkeit auf jeden Fall wünschenswert, weil dann eventuell später auftretende Lecks oder Schäden im Inneren des Verbindungsgehäuses (z.B. bei der Kabelverbindung oder die Instrumentierung) einfacher repariert werden könnten.

Bisher bekannte "Paschen-dichte" Isolationen für Hochspannungen werden meist durch Naßwickeln mit Epoxidharzgetränktem Gewebe hergestellt. Dabei können auch feste, vorgeformte Isolatorteile, beispielsweise aus GFK (glasfaserverstärkter Kunststoff) mitverwendet werden. Nachteile dieser Methode sind einerseits der hohe Arbeitsaufwand sowie die Schwierigkeit der Herstellung bei beengten Raumverhältnissen und andererseits die Tatsache, daß diese Isolation nicht einfach abnehmbar ist.

Eine andere bekannte Möglichkeit der "Paschen-dichten" Isolation eines Verbindungsgehäuses wäre, letzteres lose mit einer Isolatorhülle zu umgeben und den Zwischenraum zwischen Hülle und Topf bzw. den Leiter- und Rohrenden auszuschäumen oder mit Isolierpulver oder Glasperlen auszufüllen. Eine solche Isolation wäre zwar relativ einfach und platzsparend herzustellen, eine eventuelle Demontage wäre aber immer noch aufwendig. Außerdem wäre ein relativ großes poröses Volumen zu evakuieren. (Der Schaumstoff müßte offenporig sein). Sollte dieses Volumen Helium enthalten, wäre die Lecksuche im gesamten Hochvakuumraum erschwert.

Außer den erwähnten existieren noch zahlreiche weitere Vorschläge für die Isolation von Spulenanschlüssen. Sie sind aber sehr aufwendig und/oder benötigen viel Platz, oder sie sind nur für niedrige Spannungen weit unter 10 kV geeignet.

Der vorliegenden Erfindung liegt demzufolge die Aufgabe zugrunde, eine Hochspannungsisolation anzugeben, die unter beengten Raumverhältnissen einfach montierbar und abnehmbar ist und wenig Platz beansprucht.

Diese Aufgabe wird durch die kennzeichnenden Merkmale des Anspruchs 1 gelöst. Vorteilhafte Ausgestaltungen sind in den Unteransprüchen angegeben.

Die Erfindung vermeidet die Nachteile bekannter Hochspannungsisolationen von Leiterverbindungen und -anschlüssen supraleitender Spulen für Spannungen ab einigen kV. Erfindungsgemäß wird das Verbindungsgehäuse eines solchen Anschlusses lose mit einer Isolierhülle umgeben, in die ein gasdurchlässicer und elektrisch isolierender Einsatz zur Evakuierung der Hülle eingesetzt ist.

Im folgenden werden Ausführungsbeispiele der Erfindung anhand der Figuren näher erläutert.

Es zeigen:
- Fig. 1: eine Ausführungsform einer erfindungsgemäßen Hochspannungsisolation mit verschraubbarer Isolierhülle oder Befestigungen nach Varianten A oder B;
- Fig. 2a-2f: verschiedene Ausführungsformen von Filtersystemen;
- Fig. 3: eine weitere Ausführungsform der Erfindung mit Anschlüssen auf zwei Seiten;
- Fig. 4: eine weitere Ausführungsform der Erfindung unter zusätzlicher Verwendung eines Potentialschirms;
- Fig. 5: ein experimenteller Aufbau zur Erprobung einer erfindungungsgemäßen Vorrichtung; und
- Fig. 6: ein experimenteller Aufbau zur Erprobung einer weiteren erfindungsgemäßen Vorrichtung.

Fig. 1 zeigt eine Ausführungsform der Erfindung, bei der die Isolierhülle verschraubbar ausgeführt ist: Das metallische Gehäuse 1 sowie die blanken Enden der Leiterhüllen 2 und des He-Rohres 4 sind von einer Isolatorhülle, bestehend aus den Teilen 6 und 7, umgeben. In den Teil 6 der Hülle ist der Einsatz 8 eingesetzt (vorteilhafterweise eingeklebt). Letzterer könnte sich an einer beliebigen Stelle der Hülle sowohl im Teil 6 als auch im Teil 7 befinden. Die Teile 6 und 7 sind vorteilhafterweise miteinander verschraubt, so daß der Teil 6 einfach montiert bzw. abgenommen werden kann. Das Gewinde zwischen den beiden Hüllenteilen ist so gedichtet, daß an dieser Stelle auch bei der höchstmöglichen Spannung im Paschen-Minimum kein Durchschlag erfolgen kann.

Die Montage der Isolation nach Fig. 1 könnte beispielsweise so erfolgen, daß schon vor der Montage des Gehäuses 1 der Teil 7 über die Leiter- und Rohrenden aufgeschoben wird. Nach der Montage der Leiterverbindung, des He-Anschlusses, einer eventuellen Instrumentierung sowie des Verbindungsgehäuses würden dann die Teile 6 und 7 vorläufig verschraubt, in die richtige Lage gebracht, und der Teil 7 mit den Isolationen 5 der Leiter- bzw. Rohrenden verklebt. Der Teil 6 mit dem Einsatz 8 würde nach dem Aushärten der Klebestellen endgültig mit dem Teil 7 verschraubt werden.

Die erfindungsgemäße Isolation erfüllt alle drei genannten Anforderungen. Der Zwischenraum zwischen dem Verbindungsgehäuse und der Hülle wird über den Einsatz 8 ausreichend gut evakuiert. Die Öffnung hat den zusätzlichen Vorteil, daß daran ein Leckdetektor für einen integralen (warmen) Lecktest des Verbindungsgehäuses angeschlossen werden kann.

In einer anderen möglichen Ausführungsform sind die Teile 6 und 7, wie im Detail "Variante A" der Fig. 1 dargestellt, über eine Flanschverbindung miteinander lösbar verbunden. Die Dichtung zwischen den Flanschen kann geometrisch verschiedenartig geformt, muß aber wiederum "Paschen-dicht" sein.

Für höhere Spannungen könnte es erforderlich sein, die Verbindungsstelle zwischen den Hüllenteilen 6 und 7 zu verkleben. Die "Variante B" in Fig. 1 stellt ein Beispiel einer einfach lösbaren Klebestelle dar. Dabei werden die Teile 6 und 7 zusammengefügt und die Verbindungsstelle beispielsweise mit epoxidharzgetränktem Isolatorgewebe "naß" umwickelt, so daß ein mit der Hülle fest verbundener Ring 9 entsteht. Anstatt einen Naßwickel herzustellen könnte man auch einen festen Ring aufkleben. Für eine eventuelle spätere Demontage müßte nur der Ring 9 abgeschliffen werden. Beide Hüllenteile wären wieder verwendbar.

Der Einsatz 8 in der Isolierhülle hat die Aufgabe, den Stromtransport im ionisierten Gas im "Paschen-Minimum" bei niedrigen Gasdrücken zu vermeiden bzw. sehr stark zu vermindern. Als Einsatz 8 kann z.B. ein konventioneller Filter, z.B. ein HDPE (high density polyethylene)-Filter, verwendet werden.

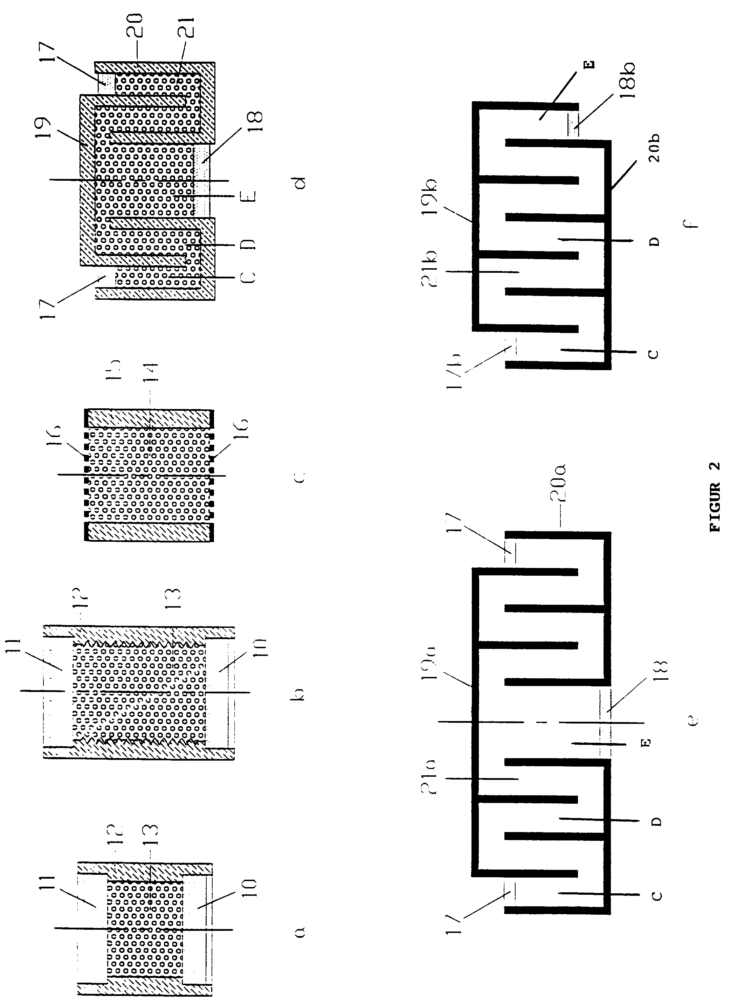

In einer weiteren Ausführungsform wird anstelle des Filters 8 ein Filtersystem, bestehend aus mehreren Teilen, eingesetzt. Die Fig. 2a und b zeigen solche Filtersysteme, die aus den Filtern 10 und 11 bestehen, die in ein Isolatorrohr 12 eingeklebt sind. Der Raum zwischen den beiden Filtern kann mit gasdurchlässigem Schaum, Isolierpulver oder Glasperlen 13 ausgefüllt sein. Beim Filtersystem der Fig. 2b wird die Überschlagsstrecke an der Innenwand des Rohres 12 durch Rillen verlängert. Zusätzlich behindern die Rillen (wegen der wechselnden Winkel der Feldlinien zur Wand) durchgehende Entladungen. In der Ausführung Fig. 2c besteht das Filtersystem nur aus Schaum, Pulver oder Glasperlen 14, die von einem Isolatorrohr 15 und gasdurchlässigen Geweben oder Sieben 16 eingeschlossen sind.

Im Filtersystem der Abbildung 2d wird die elektrische Entladung um 180° so umgelenkt, daß sie, in Bezug zum außen anliegenden Feld, teilweise in einem elektrischen Gegenfeld erfolgt und dadurch stark reduziert wird. Dazu werden ein topfförmiger Isolatorteil (19) und ein als Ringgefäß ausgeführter Isolator (20) so ineinandergesteckt, daß die Entladung nacheinander durch den äußeren Ringraum (C), den inneren Ringraum (D) sowie die innere Öffnung des Ringgefäßes (E) - oder umgekehrt - erfolgen muß. Im inneren Ringraum (D) fließt der Entladestrom gegen die außen anliegende Spannung. Der äußere Ringraum (C) sowie die innere Öffnung des Ringgefäßes (E) sind mit einem Filter, Sieb oder Gewebe (17 bzw. 18) abgeschlossen. Der gesamte, aus den drei Teilräumen (C, D, E) bestehende Entladungsraum zwischen den Filtern (bzw. Sieben oder Geweben) kann bei niedrigeren Spannungen leer sein oder ist zur Isolation höherer Spannungen mit Glasperlen, Pulver oder offenporigem Schaum gefüllt. Der Isolatorteil (19) wird entweder nur vom ringförmigen Filter (17) oder von zusätzlichen, den Entladungsraum nicht unterbrechenden Halteelementen in seiner Lage gehalten.

In konsequenter Fortführung dieser Idee der Umlenkung des Durchschlagsweges sind auch Filteranordnungen möglich, bei denen weitere Ringräume hinzugefügt werden, in denen eine Entladung mehrfach die Richtung zum elektrischen Feld wechseln muß. Fig. 2e zeigt eine soiche Anordnung, bei der die Entladerichtung zweimal gegen das Feld gerichtet ist.

Die im Querschnitt cezeigten Filtersysteme der Fig. 2a bis 2e müssen selbstverständlich nicht eine runde, sondern können beliebige Grundrißformen besitzen. Beispielsweise können die Figuren 2d und 2e auch als Schnitte durch quaderförmige Anordnungen gesehen werden, bei denen die Teile 19 und 20 bzw. 19a und 20a sowie der dann in zwei rechteckige Teile zerfallende Filter 17 und ebenfalls rechteckige Filter 18 über zwei Seitenwände so verklebt sind, daß der Entladeraum 21 bzw. 21a seitlich geschlossen ist.

Eine andere Ausführungsform einer solchen quaderförmigen Anordnung ist in Fig. 2f gezeigt. Die kammförmigen Teile 19b und 20b sowie die rechteckigen Filter 17b und 18b werden über Seitenwände so verklebt, daß ein mäanderförmiger Entladungsraum 21b entsteht.

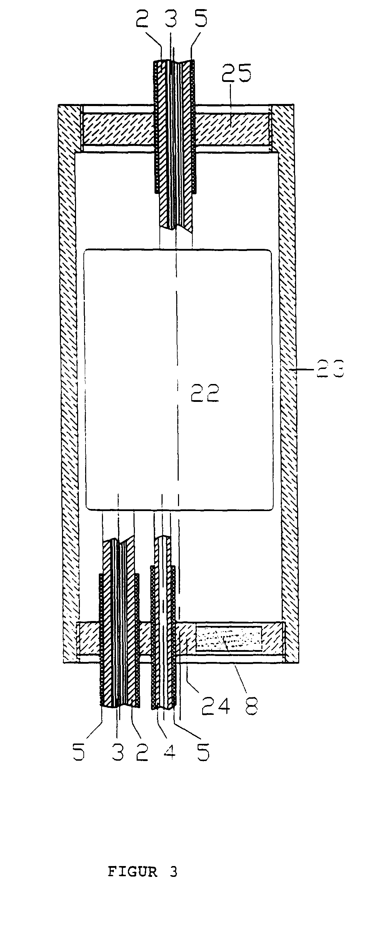

Eine weitere Ausführungsform der Erfindung ist in Fig. 3 dargestellt. In diesem Fall besitzt das Gehäuse 22 Leiter und/oder Rohranschlüsse auf zwei Seiten; es ist von der Isolatorhülle bestehend aus den Teilen 23, 24 und 25 umgeben. Der Filter 8 ist in den Teil 24 eingesetzt, er könnte sich aber wiederum an einer beliebigen Stelle der Hülle befinden. Der Durchmesser des Teils 24 ist größer als der des Teils 25.

Die Montage dieser Isolation erfolgt im wesentlichen so, daß zuerst der Teil 23 und danach der Teil 25 über die Leiter und Rohre auf der oberen Seite des Gehäuses 22 und sodann der Teil 24 über die Leiter und Rohre auf der unteren Seite geschoben werden. Dann werden die Anschlüsse hergestellt, das Gehäuse 22 montiert und die Teile 24 und 25 durch vorläufiges Verschrauben mit Teil 23 in die richtige Lage gebracht und danach verklebt. Bei der Endmontage wird das Rohr 23 gleichzeitig mit den Teilen 24 und 25 über entsprechende Dichtmaterialien verschraubt.

Anstelle der gezeichneten Gewinde können auf beiden oder auch nur auf einer Seite Flanschverbindungen oder Verklebung etwa entsprechend Variante A bzw. Variante B in Fig. 1 verwendet werden.

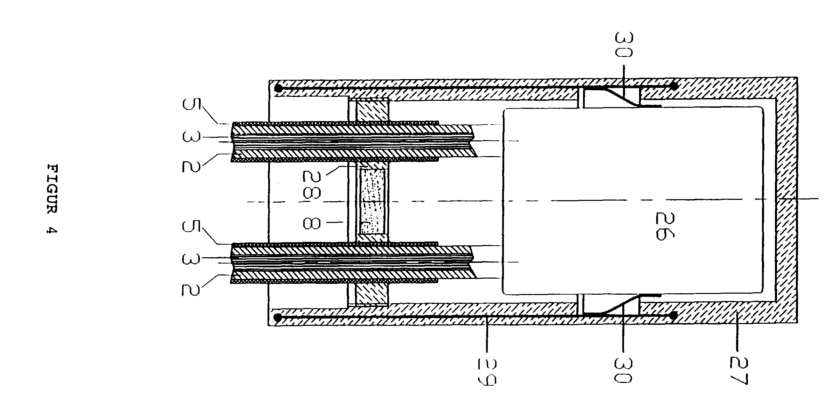

Eine weitere Ausführungsform der Erfindung ist in Fig. 4 dargestellt. In dieser Variante werden die Schwachstellen der Isolation, nämlich der Filter 8 und das Gewinde zwischen den Hüllenteilen 27 und 28, durch einen Potentialschirm 29 so abgeschirmt, daß diese Schwachstellen in Bereichen mit niedrigen elektrischen Feldstärken zu liegen kommen. Der elektrische Kontakt zwischen dem Verbindungsgehäuse 26 und dem Potentialschirm 29 wird über Federelemente 30 hergestellt Diese Federn 30 sind mit dem Potentialschirm 29 fest verbunden und bilden mit dem Gehäuse 26 einen druckbelasteten Schleifkontakt. Die Montage dieser Isolation entspricht der der Isolation nach Fig. 1.

Am Gehäuse 26 des Beispiels Fig. 4 könnten selbstverständlich entsprechend Fig. 1 auch Helium- oder Instrumentierungsrohre angeschlossen werden, es wäre dafür trotz des Filters 8 ausreichend Platz im Teil 28 vorhanden.

Weiter ist es möglich, einen den Teilen 29 und 30 entsprechenden Potentialschirm auch in einer Anordnung wie in Fig. 3 zu verwenden. Dazu müßte in ein oben und unten verlängertes Rohr 23 ein entsprechend langer Potentialschirm, der sowohl das obere als auch untere Gewinde und den Filter abschirmt, eingesetzt werden.

Die erfindungsgemäße Hochspannungsisolation für Einrichtungen in Gasen bei niedrigen Drücken könnte beim geplanten Stellarator W7-X zur "Paschen-dichten" Isolierung der Spulenanschlüsse eingesetzt werden. Dort werden etwa 500 solcher Isolationen für Prüfspannungen zwischen 10 und 20 kV benötigt. Der Test- und Demonstrationskryostat für W7-X wird etwa 50 Leiter-Verbindungstöpfe enthalten.

Weitere potentielle Anwendungsmöglichkeiten sind bei ITER und allen Fusions- oder anderen Projekten gegeben, bei denen Magnetspulen mit intern gekühlten Supraleitern oder normalleitenden Kabeln verwendet werden, und die im Betrieb von Vakuum umgeben sind.

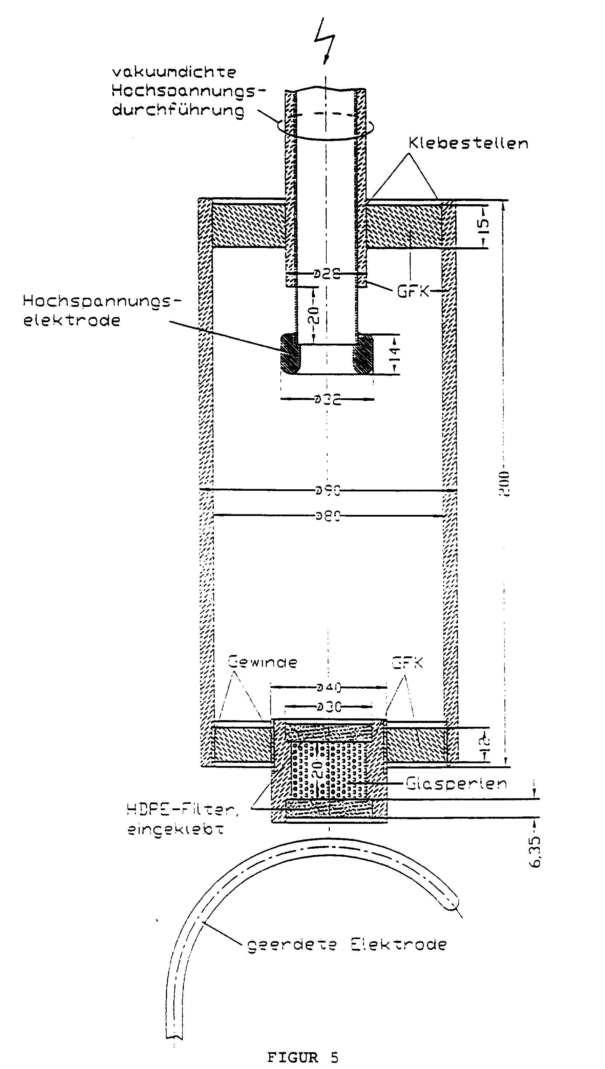

Die Erfindung wurde in einer Ausführung nach Fig. 5 erprobt. Die Gasatmosphäre bestand aus Helium mit verschiedenen Drücken im Bereich von 10⁻⁴ mbar bis 0,4 bar, so daß die Isolation mit Sicherheit den Bedingungen des Paschen-Minimums ausgesetzt war.

Die Isolierhülle war aus GFK-Teilen zusammengeklebt bzw. verschraubt, die beiden Gewinde waren mit Teflonbändern abgedichtet. Das Filtersystem bestand aus einer Kombination von zwei eingeklebten HDPE-Filtern mit Porengrößen von ca. 250 µm und dazwischenliegenden Glasperlen mit Durcnmessern von 200 µm bis 300 µm. Die gesamte Anordnung war konzentrisch in einem zylindrischen, geerdeten Vakuumgefäß aus Metall mit einem Innendurchmesser von 315 mm angeordnet.

Mit der gezeigten Anordnung wurden je nach Gasdruck sowohl langsam als auch stoßweise aufgebrachte Gleichspannungen zwischen 8 kV und 12 kV mit Standzeiten von einer Minute erreicht.

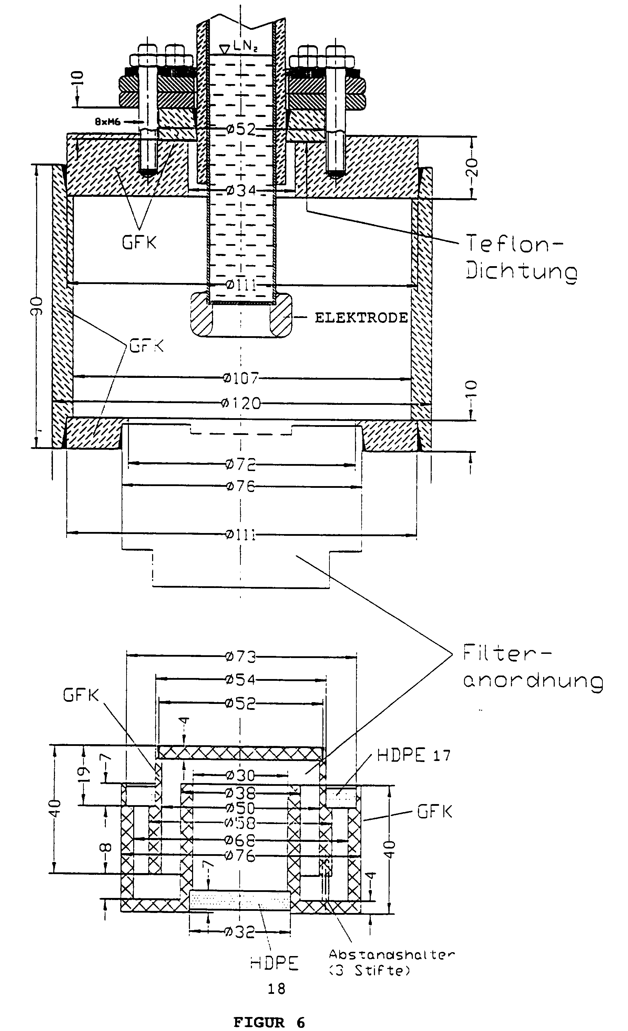

Fig. 6 zeigt einen experimentellen Aufbau zur Erprobung einer erfindungsgemäßen Vorrichtung mit einer weiteren Filteranordnung. Die Schnittdarstellungen in Fig. 6 sind zur Verdeutlichung der Größenverhältnisse mit Maßangaben (Millimeter) versehen. Die Maßancaben in Figur 5 und Figur 6 repräsentieren lediglich beispielhaft spezielle Ausführungsformen und können an die Dimensionen eines konkret realisierten Aufbaus angepaßt werden. Die Anordnung nach Fig. 6 wurde in derselben Versuchseinrichtung bei einer Temperatur von ca. 80 K und bei Heliumatmosphäre mit Drücken wie oben erfolgreich bis 16 kV getestet. Die Filteranordnung entspricht der Fig. 2d. Sie war mit Glasperlen gefüllt, und es wurde dasselbe HDPE-Filtermaterial verwendet. Die Filteranordnung kann wie in Fig. 6 unten dargestellt mit inneren Abstandshaltern z.B. in Form von mehreren Stiften versehen sein, die zwischen den verschiedenen Seitenwänden (Isolatorelemente) der Filteranordnung vorgesehen sind, um die Stabilität der Filteranordnung zu erhöhen. Die Isolierhülle wurde gemäß Fig. 1, Variante A, mit einem flachen Teflonring gedichtet (Flanschdichtung am oberen Ende). Es konnte gezeigt werden, daß die Filteranordnung für die beschriebenen Zwecke ausreichend gasdurchlässsig ist und das Abpumpen der Einrichtung auf Hochvakuum ohne wesentliche Verzögerung erlaubt.

Mit einem einzelnen HDPE-Filter mit einem Durchmeser von 30 mm, einer Dicke von 6,35 mm und einer Porengröße von 125 µm wurde eine Durchschlagsspannung von ca. 2 kV erreicht.

## Patentansprüche

1. Hochspannungsisolation zum Isolieren von Kabelverbindungen und/oder Strom- und/oder Kühlmittelanschlüssen vakuumisolierter Magnetspulen, insbesondere supraleitender Magnetspulen mit intern gekühlten Kabeln (2, 3), **dadurch gekennzeichnet,** daß der zu isolierende Bereich von einer Isolatorhülle (6, 7; 23, 24, 25) umgeben ist, wobei die Hüllenwand eine Öffnung aufweist und in die Öffnung ein gasdurchlässiger und elektrisch isolierender Einsatz (8, 10-21) zur Evakuierung des Innenraums der Hülle eingesetzt ist.

2. Hochspannungsisolation nach Anspruch 1, **dadurch gekennzeichnet,** daß der Einsatz (8, 10-21) ein Filter (8) oder ein Filtersystem (10-13; 14-16; 17-21) ist.

3. Hochspannungsisolation nach Anspruch 1 oder 2, **dadurch gekennzeichnet**, daß die Verbindung zwischen den Kabeln oder der Stromanschluß der Magnetspule sich in einem Gehäuse (1) befindet und/oder die Kühlmittelzu- oder -abfuhr über ein solches Gehäuse (1) erfolgt und die Kabelhüllen (2) und/oder die Kühlmittelleitunc (4) mit dem Gehäuse (1) verschweißt sind.

4. Hochspannungsisolation nach einem oder mehreren der vorhergehenden Ansprüche, **gekennzeichnet durch** einen ersten ebenen Hüllenwandteil (7) und einen zweiten, topfartigen Hüllenteil (6).

5. Hochspannungsisolation nach einem oder mehreren der Ansprüche 1 bis 3 **gekennzeichnet durch** zwei ebene Hüllenwandteile (24, 25) und einen rohrförmigen Hüllenteil (23).

6. Hochspannungsisolation nach Anspruch 4 oder 5, **dadurch gekennzeichnet,** daß die Hüllenwandteile (7; 24, 25) eine Anzahl von Durchgängen für die Strom- und Kühlmittelanschlüsse aufweisen.

7. Hochspannungsisolation nach einem oder beiden der Ansprüche 4 und 6, **dadurch gekennzeichnet,** daß der Hüllenwandteil (7) und der Hüllenteil (6) miteinander verschraubbar sind.

8. Hochspannungsisolation nach einem oder beiden der Ansprüche 5 und 6, **dadurch gekennzeichnet,** daß einer oder beide Hüllenwandteile (24, 25) und der Hüllenteil (23) miteinander verschraubbar sind.

9. Hochspannungsisolation nach einem oder beiden der Ansprüche 4 und 6, **dadurch gekennzeichnet,** daß der Hüllenwandteil (7) und der Hüllenteil (6) über eine Flanschverbindung lösbar miteinander verbunden sind.

10. Hochspannungsisolation nach einem oder beiden der Ansprüche 5 und 6, **dadurch gekennzeichnet,** daß einer oder beide Hüllenwandteile (24, 25) und der Hüllenteil (23) über Flanschverbindungen lösbar miteinander verbunden sind.

11. Hochspannungsisolation nach einem oder beiden der Ansprüche 4 und 6, **dadurch gekennzeichnet**, daß der Hüllenwandteil (7) und der Hüllenteil (6) miteinander verklebt sind.

12. Hochspannungsisolation nach einem oder beiden der Ansprüche 5 und 6, **dadurch gekennzeichnet,** daß einer oder beide Hüllenwandteile (24, 25) und der Hüllenteil (23) miteinander verklebt sind.

13. Hochspannungsisolation nach einem oder mehreren der Ansprüche 2-12, **dadurch gekennzeichnet,** daß das Filtersystem (10-13) zwei Filter (10) und (11) enthält, die voneinander beabstandet in einem Isolatorrohr (12) eingeschlossen sind und deren Zwischenraum mit einem Isoliermittel (13) wie gasdurchlässiger Schaum, Pulver oder Glasperlen ausgefüllt ist.

14. Hochspannungsisolation nach einem oder mehreren der Ansprüche 2-12, **dadurch gekennzeichnet,** daß das Filtersystem (14-16) gasdurchlässige Gewebe oder Siebe (16) enthält, die voneinander beabstandet mit einem Isolatorrohr (15) verbunden sind und deren Zwischenraum mit einem Isoliermittel (14) wie gasdurchlässiger Schaum, Pulver oder Glasperlen ausgefüllt ist.

15. Hochspannungsisolation nach einem oder mehreren der Ansprüche 2-12, **dadurch gekennzeichnet,** daß das Filtersystem (17-21) aus zwei Isolatorelementen (19, 19a, 19b, 20, 20a, 20b) besteht, die die Gestalt einseitig offener Gefäße mit Boden-, Seiten- und Trennwänden aufweisen und mit ihren offenen Seiten derart ineinander verschachtelt sind, daß die Spannungs-Entladestrecke aus mäanderartig in Serie geschalteten Entladeräumen (C, D, E) besteht, wobei ein äußerer Raum (C) mit einem Filter, Sieb oder Gewebe (17) und ein innerer Raum (E) des Isolatorelementes (20, 20a) oder ein äußerer Raum des Isolatorelementes (19b) mit einem Filter, Sieb oder Gewebe (18) abgeschlossen ist und der Zwischenraum zwischen den Filtern oder Sieben oder Geweben (17, 18) entweder leer oder mit einem Isoliermittel (21) wie gasdurchlässiger Schaum, Pulver oder Glasperlen ausgefüllt ist.

16. Hochspannungsisolation nach Anspruch 15, **dadurch gekennzeichnet,** daß die Bodenwände der Isolatorelemente (19, 19a, 20, 20a) eine im wesentlichen kreisförmige Gestalt aufweisen, wobei das erste Isolatorelement topfartig (19) oder in Gestalt eines Topfes (19a) mit ringförmiger Trennwand und das zweite Isolatorelement wie ein Ringgefäß (20) oder ein Ringgefäß (20a) mit ringförmiger Trenwand ausgeführt ist, so daß ringförmige Entladeräume (C, D) und ein rohrförmiger Entladeraum (E) gebildet werden.

17. Hochspannungsisolation nach Anspruch 15, **dadurch gekennzeichnet,** daß die Bodenwände der Isolatorelemente (19b, 20b) eine im wesentlichen rechteckige Gestalt aufweisen und die Seiten- und Trennwände im wesentlichen senkrecht zueinander angeordnet sind.

18. Hochspannungsisolation nach einem oder mehreren der vorherigen Ansprüche, **dadurch gekennzeichnet,** daß die Schwachstellen der Isolation durch einen Potentialschirm (29) derart abgeschirmt werden, daß sie in Bereichen mit niedrigen elektrischen Feldstärken zu liegen kommen.

## Claims

1. High voltage insulation for insulating cable connections and/or current and/or coolant connections of vacuum insulated magnet coils, especially super-conducting magnet coils with internal cooled cables (2, 3), characterized in that the region to be insulated is surrounded by an insulating sheath (6, 7; 23, 24, 25), while the sheath wall has an opening and a gas-permeable and electrically insulating insert (8, 10-21) is fitted in the opening for evacuation of the interior of the sheath.

2. High voltage insulation according to claim 1, characterized in that the insert (8, 10-21) is a filter (8) or a filter system (10-13; 14-16; 17-21).

3. High voltage insulation according to claim 1 or 2, characterized in that the connection between the cables or the current connection of the magnet coil is located in a housing (1) and/or the coolant inlet or outlet is effected through such a housing (1) and the cable sheathes (2) and/or the coolant line (4) are welded to the housing (1).

4. High voltage insulation according to one or more of the preceding claims, characterized by a first, flat sheath wall part (7) and a second, pot-like sheath part (6).

5. High voltage insulation according to one or more of claims 1 to 3, characterized by two flat sheath wall parts (24, 25) and a tubular sheath part (23).

6. High voltage insulation according to claim 4 or 5, characterized in that the sheath wall parts (7; 24, 25) have a plurality of passages for the current and coolant connections.

7. High voltage insulation according to one or both of claims 4 and 6, characterized in that the sheath wall part (7) and the sheath part (6) can be screwed together.

8. High voltage insulation according to one or both of claims 5 and 6, characterized in that one or both sheath wall parts (24, 25) and the sheath part (23) can be screwed together.

9. High voltage insulation according to one or both of claims 4 and 6, characterized in that the sheath wall part (7) and the sheath part (6) are connected together releasably via a flange connection.

10. High voltage insulation according to one or both of claims 5 and 6, characterized in that one or both sheath wall parts (24, 25) and the sheath part (23) are connected together releasably via a flange connection.

11. High voltage insulation according to one or both of claims 4 and 6, characterized in that the sheath wall part (7) and the sheath part (6) are bonded together.

12. High voltage insulation according to one or both of claims 5 and 6, characterized in that one or both sheath wall parts (24, 25) and the sheath part (23) are bonded together.

13. High voltage insulation according to one or more of claims 2 to 12, characterized in that the filter system (10-13) has two filters (10) and (11), which are enclosed and spaced from one another in an insulating tube (12), the space between them being filled with an insulating medium (13) such gas-permeable foam, powder or glass beads.

14. High voltage insulation according to one or more of claims 2 to 12, characterized in that the filter system (14-16) contains gasp-permeable fabrics or sieves which are attached to an insulating tube (15) and spaced from one another, the space between them being filled with an insulating medium (14) such gas-permeable foam, powder or glass beads.

15. High voltage insulation according to one or more of claims 2 to 12, characterized in that the filter system (17-21) consists of two insulator elements (19, 19a, 19b, 20, 20a, 20b), which have the form of a vessel open on one side, with bottom, side and partition walls and their open sides so fitted into one another that the voltage discharge path consists of meandering discharge spaces (C, D, E) connected in series, wherein the outer space (C) is closed by a filter, sieve or fabric (17) and an inner space (E) of the insulator element (20, 20a) or an outer space of the insulator element (19b) is closed with a filter, sieve or fabric (18) and the intervening space between the filters or sieves or fabrics (17, 18) is either empty or filled with an insulating medium (21), such as gas permeable foam, powder or glass beads.

16. High voltage insulation according to claim 15, characterized in that the bottom wall of the insulating elements (19, 19a, 20, 20a) has a substantially circular shape, wherein the first insulator element is made like a pot (19) or in the form of a pot (19a) with an annular partition wall and the second insulator element is made as an annular vessel (20) or an annular vessel (20a) with an annular partition wall, so that annular discharge spaces (C, D) and a tubular discharge space (E) are formed.

17. High voltage insulation according to claim 15, characterized in that the bottom walls of the insulator elements (19b, 20b) have a substantially rectangular shape and the side and partition walls are arranged substantially perpendicular thereto.

18. High voltage insulation according to one or more of the preceding claims, characterized in that the weak points in the insulation are so shielded by a potential screen (29) that they come to lie in regions with low electric field strengths.

## Revendications

1. Isolation à haute tension pour l'isolation de connexions de câbles et/ou de bornes de courant et/ou de raccords de fluide réfrigérant de bobines d'aimant isolées sous vide, en particulier de bobines d'aimant supraconductrices comportant des câbles (2,3) refroidis intérieurement, caractérisée en ce que la zone à isoler est entourée d'une enveloppe isolante (6,7; 23,24,25), la paroi de l'enveloppe présente une ouverture et dans cette ouverture est engagé un insert perméable au gaz et isolant électriquement (8,10-21) pour l'évacuation de l'espace interne de l'enveloppe.

2. Isolation à haute tension suivant la revendication 1, caractérisée en ce que l'insert (8, 10-21) est un filtre (8) ou un système de filtres (10-13; 14-16; 17-21).

3. Isolation à haute tension suivant la revendication 1 ou 2, caractérisée en ce que la connexion entre les câbles ou la connexion électrique de la bobine d'aimant se trouve dans un boîtier (1) et/ou l'alimentation ou l'évacuation de fluide réfrigérant s'effectue par l'intermédiaire d'un tel boîtier (1) et les gaines (2) des câbles et/ou les conduits de fluide réfrigérant (4) sont soudés au boîtier (1).

4. Isolation à haute tension suivant une ou plusieurs des revendications précédentes, caractérisée en ce qu'elle comprend une première partie de paroi d'enveloppe (7) de forme plane et une seconde partie d'enveloppe (6) en forme de pot.

5. Isolation à haute tension suivant une ou plusieurs des revendications 1 à 3, caractérisée en ce qu'elle comprend deux parties de paroi d'enveloppe (24,25) de forme plane et une partie d'enveloppe (23) de forme tubulaire.

6. Isolation à haute tension suivant la revendication 4 ou 5, caractérisée en ce que les parties de paroi d'enveloppe (7; 24,25) présentent un nombre de passages pour les connexions électriques et les raccords du fluide réfrigérant.

7. Isolation à haute tension suivant l'une au moins des deux revendications 4 et 6, caractérisée en ce que la partie de paroi d'enveloppe (7) et la partie d'enveloppe (6) peuvent être vissées l'une par rapport à l'autre.

8. Isolation à haute tension suivant l'une au moins des deux revendications 5 et 6, caractérisée en ce que l'une ou les deux parties de paroi d'enveloppe (24,25) et la partie d'enveloppe (23) peuvent être vissées l'une par rapport à l'autre.

9. Isolation à haute tension suivant l'une au moins des deux revendications 4 et 6, caractérisée en ce que la partie de paroi d'enveloppe (7) et la partie d'enveloppe (6) sont liées l'une à l'autre, d'une manière amovible, par l'intermédiaire d'une liaison par bride.

10. Isolation à haute tension suivant l'une au moins des deux revendications 5 et 6, caractérisée en ce que l'une ou les deux parties de paroi d'enveloppe (24,25) et la partie d'enveloppe (23) sont liées l'une à l'autre, d'une manière amovible, par l'intermédiaire de liaisons du type à bride.

11. Isolation à haute tension suivant l'une au moins des deux revendications 4 et 6, caractérisée en ce que la partie de paroi d'enveloppe (7) et la partie de paroi (6) sont collées l'une à l'autre.

12. Isolation à haute tension suivant l'une au moins des deux revendications 5 et 6, caractérisée en ce que l'une ou les deux parties de paroi d'enveloppe (24,25) et la partie d'enveloppe (23) sont collées les unes aux autres.

13. Isolation à haute tension suivant une ou plusieurs des revendications 2 à 12, caractérisée en ce que le système de filtres (10-13) comporte deux filtres (10) et (11) qui sont enfermés, à distance l'un de l'autre, dans un tube isolant (12) et dont l'espace intermédiaire est rempli d'une matière isolante (13) telle qu'une mousse, une poudre ou des perles de verre perméables aux gaz.

14. Isolation à haute tension suivant une ou plusieurs des revendications 2 à 12, caractérisée en ce que le système de filtres (14-16) comporte des tissus ou des tamis perméables aux gaz qui sont enfermés, à distance l'un de l'autre, dans un tube isolant (15) et dont l'espace intermédiaire est rempli d'une matière isolante (14) telle qu'une mousse, une poudre ou des perles de verre perméables aux gaz.

15. Isolation à haute tension suivant une ou plusieurs des revendications 2 à 12, caractérisée en ce que le système de filtres (17-21) comporte deux éléments isolants (19, 19a, 19b, 20, 20a, 20b) qui présentent la forme d'un récipient ouvert d'un côté avec des parois de fond, latérale et de séparation, et qui sont imbriqués l'un dans l'autre par leurs côtés ouverts, le trajet de décharge de la tension est constitué de chambres de décharge (C, D, E) reliées en série d'une façon sinueuse, une chambre externe (C) est obturée au moyen d'un filtre, d'un tamis ou d'un tissu (17) et une chambre interne (E) de l'élément isolant (20, 20a) ou une chambre externe de l'élément isolant (19b) est obturée au moyen d'un filtre, d'un tamis ou d'un tissu (18) et l'espace intermédiaire entre les filtres ou les tamis ou les tissus (17,18) est laissé vide ou est rempli d'une matière isolante (21) telle qu'une mousse, une poudre ou des perles de verre perméables aux gaz.

16. Isolation à haute tension suivant la revendication 15, caractérisée en ce que les parois de fond des éléments isolants (19, 19a, 20, 20a) présentent une forme essentiellement circulaire, le premier élément isolant est réalisé sous la forme d'un pot (19) ou sous la forme d'un pot (19a) pourvu d'une paroi de séparation annulaire et le second élément isolant est réalisé sous la forme d'un récipient annulaire (20) ou d'un récipient annulaire (20a) pourvu d'une paroi de séparation annulaire de telle façon que soient formées des chambres de décharge annulaires (C,D) et une chambre de décharge (E) de forme tubulaire.

17. Isolation à haute tension suivant la revendication 15, caractérisée en ce que les parois de fond des éléments isolants (19b, 20b) présentent une forme sensiblement rectangulaire et les parois latérales et de séparation sont disposées sensiblement perpendiculairement les unes aux autres.

18. Isolation à haute tension suivant une ou plusieurs des revendications précédentes, caractérisée en ce que les points faibles de l'isolation sont protégés par l'intermédiaire d'un écran de potentiel (29) de telle façon qu'ils soient amenés à se trouver dans des zones à faibles intensités du champ électrique.
